# FASCICULE DE BREVET EUROPEEN

(11) **EP 1 043 466 B1**
(45) Date de publication et mention de la délivrance du brevet: **28.01.2004**
(21) Numéro de dépôt: 00400925.4
(22) Date de dépôt: 04.04.2000
(51) Int. Cl.: E05B 49/00, B60R 25/00

(54) **Véhicule automobile équipé d'un système d'accès dit "mains libres"**
Automatische Türverriegelungseinrichtung für Kraftfahrzeuge
Automatic door locking device for an automotive vehicle

(30) Priorité: 06.04.1999 FR 9904242
(43) Date de publication de la demande: 11.10.2000
(73) Titulaire: VALEO SECURITE HABITACLE S.A.S., 94042 Créteil Cédex (FR)
(72) Inventeur: Baudard, Xavier, 75016 Paris (FR)
(74) Mandataire: Hervouet, Sylvie

(56) Documents cités:
- EP-A- 0 735 219
- DE-A- 19 542 441
- GB-A- 2 310 300

## Description

La présente invention concerne un véhicule automobile équipé d'un système d'accès dit "mains libres".

Dans un tel système, un dispositif d'identification est installé sur le véhicule, pour commander les moyens de verrouillage des ouvrants du véhicule, ce dispositif d'identification étant apte à échanger à distance des données avec un identifiant porté par un utilisateur, pour permettre l'accès au véhicule lorsque l'identifiant a été authentifié par le dispositif d'identification. Pour permettre le dialogue entre le dispositif d'identification et l'identifiant, plusieurs antennes sont réparties sur le pourtour du véhicule, afin de détecter la présence de l'identifiant. De telles antennes sont, par exemple, disposées dans les rétroviseurs, les poignées de portes et les montants de portes. Lorsque l'identifiant s'éloigne de la zone de couverture desdites antennes extérieures, le système assure le verrouillage automatique des ouvrants du véhicule.

En outre, ces systèmes peuvent contrôler le démarrage du moteur du véhicule, lorsqu'une personne autorisée à conduire le véhicule est à l'intérieur de l'habitacle. Dans ce cas, des antennes sont disposées, par exemple, sur le tableau de bord, dans les sièges du véhicule ou sur les parois intérieures des portières.

Toutefois, le nombre d'antennes à implanter sur le véhicule devient important, ce qui augmente le coût et le temps de montage du système sur le véhicule.

Par ailleurs, la présente Société demanderesse a décrit, dans le document FR-A-2 740 501, un système d'accès "mains libres", dans lequel deux antennes sont disposées à l'arrière du véhicule, au niveau du coffre, de façon que les zones de couverture des deux antennes arrière ne présentent pas ou peu de recouvrement, afin que le transpondeur porté par un utilisateur puisse dialoguer avec une seule antenne à la fois. Le déverrouillage du hayon de coffre est commandé, lorsque le transpondeur est présenté selon une séquence prédéterminée aux deux antennes arrière du véhicule.

L'invention a pour but d'éliminer les inconvénients précités et de proposer un véhicule automobile équipé d'un système d'accès "mains libres", dans lequel le nombre d'antennes nécessaires est réduit, tout en ayant une couverture correcte de l'environnement du véhicule.

A cet effet, l'invention a pour objet un système d'accès pour véhicule automobile équipé d'un dispositif d'identification assurant la commande de moyens comprenant des moyens de verrouillage des ouvrants du véhicule et/ou des moyens d'anti-démarrage, ledit dispositif d'identification étant apte à échanger à distance des données avec un identifiant porté par un utilisateur, pour permettre l'accès au véhicule lorsque l'identifiant a été authentifié par le dispositif d'identification, ce dernier étant relié à plusieurs antennes extérieures sur le véhicule pour permettre le dialogue entre le dispositif d'identification et l'identifiant, lorsque ce dernier est positionné dans la zone de couverture desdites antennes, caractérisé par le fait qu'au moins une paire desdites antennes extérieures comporte une zone de recouvrement commune, pour que le dispositif d'identification soit apte à détecter la présence d'un identifiant dans ladite zone de recouvrement commune en vue de la commande par ledit dispositif d'un moyen déterminé, lorsque ladite paire d'antennes reçoit un signal en provenance du même identifiant, chaque antenne de ladite paire d'antennes comportant également une zone de couverture propre, sans chevauchement mutuel, pour que le dispositif d'identification soit apte à détecter la présence d'un identifiant dans l'une des deux zones de couverture précitées en vue de la commande par le dispositif d'un moyen autre que le moyen déterminé précité, lorsque l'antenne associée reçoit seule un signal en provenance de l'identifiant.

Avantageusement, les deux antennes de chaque paire sont agencées respectivement sur chaque côté opposé du véhicule, de façon que chaque antenne présente une zone de couverture propre s'étendant sur l'un des deux côtés du véhicule, afin que le dispositif d'identification soit apte à détecter la présence de l'identifiant à proximité d'une portière située sur l'un des deux côtés du véhicule, en vue de la commande des moyens de verrouillage des portières. De préférence, les antennes de ladite paire sont disposées symétriquement par rapport à l'axe longitudinal du véhicule.

Dans une première forme de réalisation, une paire d'antennes est agencée à l'arrière du,véhicule, de façon que la zone de recouvrement commune s'étende vers l'arrière du hayon de coffre, la détection d'un identifiant dans ladite zone de recouvrement commune, par les deux antennes, étant destinée à commander des moyens de verrouillage/déverrouillage du hayon de coffre seul.

A titre d'exemple, ladite paire d'antennes peut être implantée dans les pare-chocs arrière, les feux arrière ou les baguettes latérales arrière du véhicule.

Dans une autre forme de réalisation, une paire d'antennes est agencée sensiblement au milieu des côtés du véhicule, de façon que la zone de recouvrement commune s'étende à l'intérieur de l'habitacle du véhicule, pour permettre au dispositif d'identification de détecter la présence d'un identifiant dans l'habitacle, en vue, par exemple, de commander l'inhibition d'un moyen d'anti-démarrage du véhicule.

Avantageusement, ladite paire d'antennes est implantée dans les poignées de portières ou dans les montants verticaux de l'encadrement de portière.

Généralement, les antennes extérieures sont destinées à émettre en basse fréquence, par exemple à 125 KHz, alors que les identifiants sont aptes à répondre en émettant en radiofréquence, par exemple à 434 MHz.

Pour mieux faire comprendre l'objet de l'invention, on va en décrire maintenant, à titre d'exemples purement illustratifs et non limitatifs deux modes de réalisation représentés sur le dessin annexé.

Sur ce dessin :
- la figure 1 est une vue schématique de dessus, d'un premier mode de réalisation du véhicule selon l'invention ; et
- la figure 2 est une vue analogue à la figure 1, mais suivant une variante de réalisation.

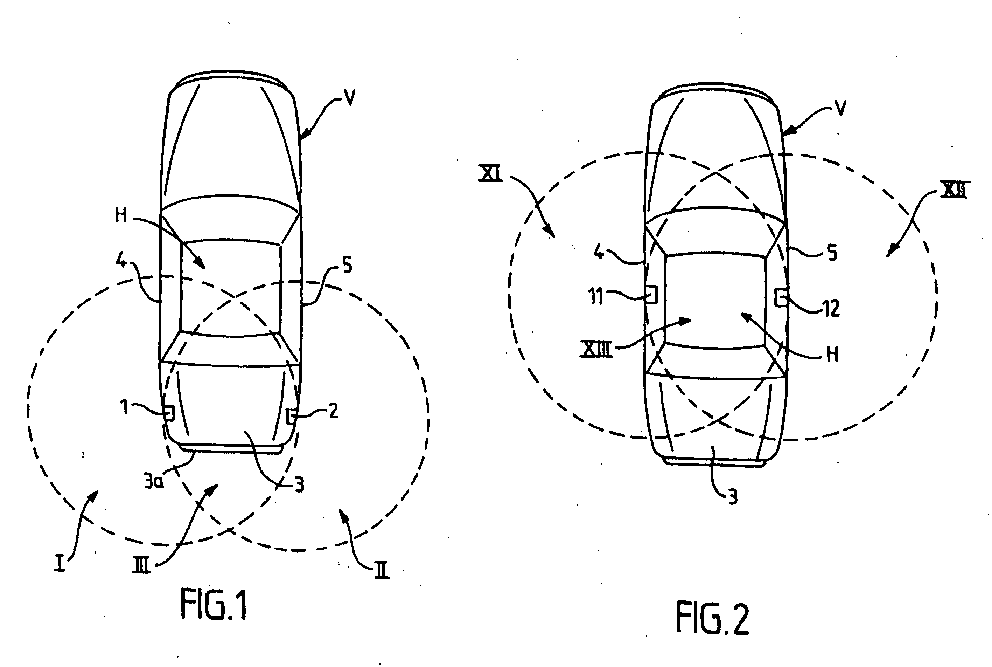

Sur la figure 1, le véhicule V comporte deux antennes latéralement opposées 1, 2 situées à l'arrière du véhicule, au niveau du hayon de coffre 3, chaque antenne extérieure 1, 2 présentant une zone de couverture propre I, II, s'étendant respectivement sur chaque côté du véhicule. La zone de recouvrement I est destinée à englober au moins en partie les portières latérales 4, sur un côté du véhicule, alors que la zone de couverture II est destinée à englober les portières latérales 5, sur le côté opposé du véhicule. Les deux antennes 1, 2 comportent, en outre, une zone de recouvrement mutuelle III, s'étendant vers l'arrière du hayon de coffre 3.

Cette zone 3 représente la zone de détection de l'approche/éloignement d'un utilisateur du hayon de coffre 3.

Bien que la zone de couverture des antennes 1, 2 puisse s'étendre en partie dans l'habitacle H du véhicule, à travers les fenêtres des portières et la lunette arrière du véhicule, la zone de couverture des antennes 1, 2, ne s'étend tout au plus que dans la partie arrière de l'habitacle, de sorte qu'elles ne sont pas capables de détecter la présence d'un identifiant porté par un utilisateur dans l'habitacle. En outre, les antennes 1 et 2 ne permettent pas d'éliminer l'utilisation d'une antenne intérieure dans le coffre, car, généralement, les parois du coffre ne permettent pas la transmission des ondes électromagnétiques à l'intérieur du coffre.

A titre d'exemple, les antennes 1, 2 pourraient être implantées aux deux extrémités latérales du pare-choc arrière 3a, ou bien dans les feux arrière du véhicule, ou bien encore dans les baguettes latérales arrière du véhicule.

Ainsi, grâce à cette implantation particulière des antennes, on peut supprimer l'antenne extérieure pour la détection de la zone de couverture extérieure du coffre, car les deux antennes latérales 1, 2 permettent à la fois de distinguer l'approche d'un identifiant sur chaque côté du véhicule et l'approche d'un identifiant à l'arrière du véhicule. En effet, pour l'approche à l'arrière du véhicule, il faut que les deux antennes 1, 2 reçoivent un signal de l'identifiant. En outre, on peut distinguer l'approche de l'utilisateur sur un côté ou l'autre du véhicule, selon que l'antenne 1 ou l'antenne 2 reçoit un signal de l'identifiant.

Dans la variante de la figure 2, deux antennes latérales 11, 12 sont implantées sur les montants verticaux au milieu du véhicule, ou par exemple, entre les portières avant et arrière, ou bien au niveau des poignées des portières avant. Chaque antenne 11, 12 présente une zone de couverture propre XI et XII respectivement, pour détecter la présence d'un identifiant sur chaque côté du véhicule. La zone de recouvrement commune XIII englobe l'habitacle H du véhicule, comme clairement représenté sur la figure 2, ce qui permet de détecter la présence d'un identifiant dans l'habitacle, lorsque les deux antennes 11, 12 détectent à la fois un signal en provenance du même identifiant. Dans cette variante, on peut ainsi éliminer l'antenne intérieure de l'habitacle du véhicule, car les deux antennes extérieures 11, 12 servent à la fois à détecter la présence d'un identifiant dans l'habitacle et l'approche/éloignement d'un identifiant par rapport aux portières du véhicule.

Bien entendu, les deux variantes illustrées sur les figures 1 et 2 peuvent être combinées. Dans ce cas, l'approche/éloignement d'un utilisateur de la portière 4 du véhicule pourrait être détecté par un signal en provenance du même identifiant qui serait reçu par les antennes 1, 11 simultanément.

De préférence, les antennes de chaque paire 1, 2 ou 11,12 sont espacées sensiblement de la largeur du véhicule.

Bien que l'invention ait été décrite en liaison avec plusieurs exemples de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système d'accès mains libres pour Véhicule automobile (V) équipé d'un dispositif d'identification assurant la commande de moyens comprenant des moyens de verrouillage des ouvrants (3-5) et/ou des moyens d'anti-démarrage du véhicule, ledit dispositif d'identification étant apte à échanger à distance des données avec un identifiant porté par un utilisateur, pour permettre l'accès au véhicule lorsque l'identifiant a été authentifié par le dispositif d'identification, ce dernier étant relié à plusieurs antennes extérieures (1, 2 ; 11, 12) sur le véhicule pour permettre le dialogue entre le dispositif d'identification et l'identifiant, lorsque ce dernier est positionné dans la zone de couverture desdites antennes, **caractérisé par le fait qu'**au moins une paire (1, 2 ; 11, 12) desdites antennes extérieures comporte une zone de recouvrement commune (III, XIII), pour que le dispositif d'identification soit apte à détecter la présence d'un identifiant dans ladite zone de recouvrement commune en vue de la commande par ledit dispositif d'un moyen déterminé, lorsque ladite paire d'antennes reçoit un signal en provenance du même identifiant, chaque antenne de ladite paire d'antennes comportant également une zone de couverture propre (I, II ; XI, XII), sans chevauchement mutuel, pour que le dispositif d'identification soit apte à détecter la présence d'un identifiant dans l'une des deux zones de couverture précitées en vue de la commande par ledit dispositif d'un moyen autre que le moyen déterminé précité, lorsque l'antenne associée reçoit seule un signal en provenance de l'identifiant.

2. Système d'accès mains libres pour Véhicule selon la revendication 1, **caractérisé par le fait que** les deux antennes (1, 2 ; 11, 12) de chaque paire sont agencées respectivement sur chaque côté opposé du véhicule, de façon que chaque antenne présente une zone de couverture propre s'étendant sur l'un des deux côtés du véhicule, afin que le dispositif d'identification soit apte à détecter la, présence de l'identifiant à proximité d'une portière (4, 5) située sur l'un des deux côtés du véhicule, en vue de la commande des moyens de verrouillage des portières.

3. Système d'accès mains libres pour Véhicule selon la revendication 2, **caractérisé par le fait que** les antennes de ladite paire sont disposées symétriquement par rapport à l'axe longitudinal du véhicule.

4. Système d'accès mains libres pour Véhicule selon l'une des revendications 1 à 3, **caractérisé par le fait qu'**une paire d'antennes (1, 2) est agencée à l'arrière du véhicule, de façon que la zone de recouvrement commune (III) s'étende vers l'arrière du hayon de coffre (3), la détection d'un identifiant dans ladite zone de recouvrement commune, par les deux antennes, étant destinée à commander des moyens de verrouillage/déverrouillage du hayon de coffre seul.

5. Système d'accès mains libres pour Véhicule selon la revendication 4, **caractérisé par le fait que** ladite paire d'antennes (1, 2) est implantée dans les pare-chocs arrière (3a), les feux arrière ou les baguettes latérales arrière du véhicule.

6. Système d'accès mains libres pour Véhicule selon l'une des revendications 1 à 5, **caractérisé par le fait qu'**une paire d'antennes (11, 12) est agencée sensiblement au milieu des côtés du véhicule, de façon que la zone de recouvrement commune (XIII) s'étende à l'intérieur de l'habitacle (H) du véhicule, pour permettre au dispositif d'identification de détecter la présence d'un identifiant dans l'habitacle, en vue, par exemple, de commander l'inhibition d'un moyen d'anti-démarrage du véhicule.

7. Système d'accès mains libres pour Véhicule selon la revendication 6, **caractérisé par le fait que** ladite paire d'antennes (11, 12) est implantée dans les poignées de portières (4, 5) ou dans les montants verticaux de l'encadrement de portière.

8. Système d'accès mains libres pour Véhicule selon l'une des revendications 1 à 7, **caractérisé par le fait que** les antennes extérieures (1, 2 ; 11, 12) sont destinées à émettre en basse fréquence, par exemple à 125 KHz, alors que les identifiants sont aptes à répondre en émettant en radiofréquence, par exemple à 434 MHz.

## Claims

1. Hands-free access system for motor vehicle (V) provided with an identification device for controlling means comprising means for locking the opening panels (3-5) and/or means for immobilising the vehicle, the said identification device being capable of remotely exchanging data with an identifier carried by a user in order to allow for access to the vehicle when the identifier has been authenticated by the identification device, the latter being connected to a plurality of external aerials (1, 2; 11, 12) on the vehicle in order to allow for dialogue between the identification device and the identifier when the latter is positioned in the coverage area of the said aerials, **characterised in that** at least one pair (1, 2; 11, 12) of the said external aerials comprises a common area of overlap (III, XIII) so that the identification device is capable of detecting the presence of an identifier in the said common area of overlap with a view to the said device controlling a predetermined means when the said pair of aerials receives a signal originating from the same identifier, each aerial of the said pair of aerials also comprising its own coverage area (I, II; XI, XII) with no mutual overlapping so that the identification device is capable of detecting the presence of an identifier in one of the two aforementioned coverage areas with a view to the said device controlling a means other than the aforesaid predetermined means when the associated aerial receives only a signal originating from the identifier.

2. Hands-free access system for vehicle according to claim 1, **characterised in that** the two aerials (1, 2; 11, 12) of each pair are arranged respectively one on each opposing side of the vehicle in such a manner that each aerial has its own coverage area extending over one of the two sides of the vehicle so that the identification device is capable of detecting the presence of the identifier in the vicinity of a door (4, 5) situated on one of the two sides of the vehicle in order to control the means for locking the doors.

3. Hands-free access system for vehicle according to claim 2, **characterised in that** the aerials of the said pair are disposed symmetrically with respect to the longitudinal axis of the vehicle.

4. Hands-free access system for vehicle according to one of claims 1 to 3, **characterised in that** a pair of aerials (1, 2) is arranged at the rear of the vehicle in such a manner that the common area of overlap (III) extends towards the rear of the hatchback (3), the detection of an identifier in the said common area of overlap by the two aerials being intended to control means for locking/unlocking only the hatchback.

5. Hands-free access system for vehicle according to claim 4, **characterised in that** the said pair of aerials (1, 2) is installed in the rear bumpers (3a), the rear lights or the rear side trims of the vehicle.

6. Hands-free access system for vehicle according to one of claims 1 to 5, **characterised in that** a pair of aerials (11, 12) is arranged substantially in the centre of the sides of the vehicle in such a manner that the common area of overlap (XIII) extends inside the passenger compartment (H) of the vehicle in order to allow the identification device to detect the presence of an identifier in the passenger compartment in order, e.g. to disable a means for immobilising the vehicle.

7. Hands-free access system for vehicle according to claim 6, **characterised in that** the said pair of aerials (11, 12) is installed in the door handles (4, 5) or in the vertical pillars of the door frame.

8. Hands-free access system for vehicle according to one of claims 1 to 7, **characterised in that** the external aerials (1, 2; 11, 12) are intended to emit at low frequency, e.g. at 125 KHz, while the identifiers are capable of responding by emitting at radio frequency, e.g. at 434 MHz.

## Patentansprüche

1. Freihändiges Zugangssystem für ein Kraftfahrzeug (V) mit einer Identifikationseinrichtung zur Betätigung von Mitteln, welche Mittel zur Verriegelung der zu öffnenden Einrichtungen (3-5) und/oder Mittel zum Verhindern des Startens des Fahrzeuges enthalten, wobei die besagte Identifikationseinrichtung geeignet ist, Daten über einen Abstand mit einer von dem Benutzer getragenen zu identifizierenden Einheit auszutauschen, um den Zugang zu dem Fahrzeug zu erlangen, wenn die zu identifizierende Einheit durch die Identifikationseinrichtung erkannt wurde, wobei Letztere mit mehreren an dem Fahrzeug angeordneten äußeren Antennen (1, 2; 11, 12) verbunden ist, um den Dialog zwischen der Identifikationseinrichtung und der zu identifizierenden Einheit zu ermöglichen, wenn Letztere sich in dem Erfassungsbereich der besagten Antennen befindet, **dadurch gekennzeichnet, daß** mindestens ein Paar der besagten äußeren Antennen (1, 2; 11, 12) einen gemeinsamen Überlappungsbereich (III, XIII) besitzt, damit die Identifikationseinrichtung in der Lage ist, die Anwesenheit der zu identifizierenden Einheit in dem besagten gemeinsamen Überlappungsbereich zu detektieren, um ein vorbestimmtes Mittel durch die besagte Einrichtung zu betätigen, wenn das besagte Paar von Antennen ein Signal von der gleichen zu identifizierenden Einheit empfängt, wobei jede der Antennen des besagten Paares von Antennen ebenfalls einen geeigneten, sich nicht gegenseitig überlappenden Erfassungsbereich (I, II; XI, XII) aufweist, so daß die Identifikationseinrichtung in der Lage ist, die Anwesenheit einer zu identifizierenden Einheit in einem der beiden Erfassungsbereiche zu detektieren, um ein anderes als das vorbestimmte Mittel durch die besagte Einrichtung zu betätigen, wenn die zugeordnete Antenne nur ein Signal von der zu identifizierenden Einheit empfängt.

2. Freihändiges Zugangssystem für ein Fahrzeug nach Anspruch 1, **dadurch gekennzeichnet, daß** die beiden Antennen (1, 2; 11, 12) jedes der Paare an jeder der gegenüberliegenden Seiten des Fahrzeuges angeordnet sind, derart, daß jede Antenne ihren eigenen Erfassungsbereich besitzt, der sich über eine der beiden Seiten des Fahrzeuges erstreckt, damit die Identifikationseinrichtung in der Lage ist, die Anwesenheit der zu identifizierenden Einheit in der Nähe einer an einer der beiden Seiten des Fahrzeuges angeordneten Tür (4, 5) zu detektieren, um die Verriegelungsmittel der Türen zu betätigen.

3. Freihändiges Zugangssystem für ein Fahrzeug nach Anspruch 2, **dadurch gekennzeichnet, daß** die Antennen des besagten Paares symmetrisch in bezug auf eine Längsachse des Fahrzeuges angeordnet sind.

4. Freihändiges Zugangssystem für ein Fahrzeug nach einem der Ansprüche 1 bis 3, **dadurch gekennzeichnet, daß** ein Paar der Antennen (1, 2) im hinteren Bereich des Fahrzeuges angeordnet ist, derart, daß der gemeinsame Überlappungsbereich (III) sich hinter den Kofferraumdeckel (3) erstreckt, wobei die Detektion einer zu identifizierenden Einheit in dem besagten Überlappungsbereich durch die beiden Antennen erfolgt, um nur die Mittel zur Ver-/Entriegelung des Kofferraumdeckels zu betätigen.

5. Freihändiges Zugangssystem für ein Fahrzeug nach Anspruch 4, **dadurch gekennzeichnet, daß** das besagte Paar von Antennen (1, 2) in den hinteren Stoßfängern (3a), den Rückleuchten oder den hinteren seitlichen Zierleisten des Fahrzeuges angeordnet ist.

6. Freihändiges Zugangssystem für ein Fahrzeug nach einem der Ansprüche 1 bis 5, **dadurch gekennzeichnet, daß** ein Paar der Antennen (11, 12) im wesentlichen in der Mitte der Seite des Fahrzeuges angeordnet ist, derart, daß der gemeinsame Überlappungsbereich (XIII) sich in das Innere des Fahrgastraumes (H) des Fahrzeuges erstreckt, um zu ermöglichen, daß die Identifikationseinrichtung die Anwesenheit einer zu identifizierenden Einheit detektiert, um beispielsweise die Sperre eines Mittels zur Verhinderung der Zündung des Fahrzeuges zu betätigen.

7. Freihändiges Zugangssystem für ein Fahrzeug nach Anspruch 6, **dadurch gekennzeichnet, daß** das besagte Paar von Antennen (11, 12) in den Griffen der Türen (4, 5) oder in den vertikalen Säulen der Karosserie der Türen angeordnet ist.

8. Freihändiges Zugangssystem für ein Fahrzeug nach einem der Ansprüche 1 bis 7, **dadurch gekennzeichnet, daß** die äußeren Antennen (1, 2; 11, 12) dazu bestimmt sind, niedrige Frequenzen, beispielsweise etwa 125 KHz, auszusenden, während die zu identifizierenden Einheiten in der Lage sind, durch Aussendung von Radiofrequenzen, beispielsweise etwa bei 434 MHz, zu antworten.
